# EUROPEAN PATENT APPLICATION

(11) **EP 4 592 213 A2**
(43) Date of publication of application: **30.07.2025**
(21) Application number: 23805204.7
(22) Date of filing: 19.09.2023
(51) Int. Cl.: B65D 85/804, A47J 31/24

(54) **ALUMINIUM CAPSULE FOR PREPARING SOLUBLE EDIBLE PRODUCTS**

(30) Priority: 22.09.2022 PT 2022118207
(71) Applicant: Mocoffee Europe, S.A., 2050-542 Vila Nova da Rainha (PT)
(72) Inventor: CARVALHO, Agostinho Miguel Quitério Garcia, 2400-842 Leiria (PT); CARAMELO, Daniel Freire Falcão Teles, 1700-141 Lisboa (PT); FLORES, Manuel Ricardo Pereira, 29056-035 Vitoria Es (BR); JOSUÉ, Sónia Raquel Da Silva Gomes, 2500-922 Caldas da Rainha (PT)
(74) Representative: Stilwell d'Andrade, Vasco
(86) International application number: PCT/PT2023/050030
(87) International publication number: WO 2024/063662

(57) **Abstract**

The present invention relates to an aluminium capsule (1) for a soluble edible product comprising a closed container (2) containing an individual dose of a soluble edible product, the container (2) being delimited by a side wall (21), a bottom part (22) and a top part (23), wherein said top part (23) comprises a truncated-conical or truncated-pyramidal element (3) whose smaller base constitutes a flat opening surface (4) of the capsule (1), wherein said opening surface (4) comprises at least one break line (5), providing a better opening of the capsule by the machine.

## Description

### FIELD OF INVENTION

The present invention relates to the field of single-use aluminium capsules for preparing soluble edible products such as espresso coffee, tea or other solubles.

### BACKGROUND TO THE INVENTION

The state of the art includes various solutions for single-use capsules for preparing edible products such as espresso coffee, tea and other solubles.

Capsules are small containers containing the edible product, used in compatible machines and allowing the edible product to be prepared quickly. Generally speaking, the capsule comprises two elements: a base cup and a lid. The base cup has a bottom that is either completely closed or pre-perforated, in either case being perforated by the punches of the edible product machine into which the capsule is placed. The opening of the capsule cup has a peripheral flap which then serves as a surface for gluing the lid, which usually consists of silver foil, aluminium foil, filter paper or micro-perforated plastic.

The capsules used in edible product machines, once placed in the machine, are perforated on both sides by a mechanised punching system, some of which are perforated when the lid of the machine compartment where the capsule is placed is closed and others are perforated by a punching mechanism that is incorporated into the machine and is driven by an electrical system, which ensures that the water is pumped and heated.

There are also capsule coffee machines that work with the aid of a lever that opens an extraction unit consisting of a container where the capsule is housed after insertion into the machine and a sealing cap that breaks or opens the capsule and introduces hot water. Once filled and under high pressure, the capsule opens and releases the water mixture which passes through the edible substance to the outside of the machine. At the end, the capsule is expelled by repeating the opening movement of the lever.

In the state of the art there are different types of capsules made up of numerous shapes and materials (paper, plastic and metal - aluminium), so they have different configurations that influence their performance in preserving the edible product. The use of different types of materials in capsule production not only makes the capsule more expensive to produce, but also creates problems with the collection, separation and sorting of waste products, especially when the capsules are collected for recycling, which is why it is sometimes more common for them to be thrown in the rubbish bin. Many existing capsules are not recyclable or are difficult to recycle. Aluminium appears to be the best material for producing capsules, as it ensures that the properties of edible products are maintained more effectively and it also has the advantage of being "infinitely recyclable", which means that it can quickly be put into a new production cycle, and it is a very light material. However, this material has very different rigidity and resistance characteristics to plastic, which could have some disadvantages in terms of plastic deformation when applied to the part of the lid that is subject to opening by the machine.

There are some solutions in the state of the art for single-use capsules that can be adapted to existing and compatible machines, which seek to overcome difficulties in terms of their adaptability to these machines, particularly in terms of optimising the perforation/opening of the capsule by the machine. There are also some solutions in the state of the art that take a more eco-responsible and sustainable approach, using recyclable materials and limiting the amount of material used in capsule manufacture.

Several documents (EP3013710B1, EP3623318A1, EP3894339A1) refer to the use of aluminium material for the construction of coffee capsules, namely the application of an aluminium layer/membrane on the bottom and/or top of the capsule.

Document WO 2021/122676A1 discloses a disposable capsule for the preparation of a beverage made of metallic material such as aluminium, specifically an aluminium alloy of the 3xxx series, and preferably aluminium alloy 3004 or 3104. It is also stated that the thickness of the aluminium alloy on the bottom and side wall of the capsule is between 50 and 100 micrometres and the thickness of the lid is between 20 and 60 micrometres. The shape of the capsule is truncated, with a sloping side wall and a dome-shaped bottom.

In this case, the lid where the perforation takes place is completely flat.

On the other hand, document PT 109815B reveals a capsule with a configuration that optimises the positioning and perforation of the capsule, through its circular lid-type construction element which is adapted to provide a passageway for the flow to enter the interior of the container-type construction element. The passageway has a region of weakened material which is adapted so that it breaks under a certain flow pressure. There is also a projection element that exerts a lever-type mechanical force on the weakened material region. In this case, the circular cap-type construction element that is perforated is made of plastic material.

Document EP 2465793B1 relates to a capsule for infusion products comprising a plastic cup-shaped structure and a plastic lid arranged to close said cup-shaped structure. This disclosure focuses on the configuration of the edge of the structure that receives the lid; and on the configuration of the lid, which conforms complementarily to the configuration of the edge of the structure. The importance of these configurations (the edge and the lid) is due to the usefulness of creating an element to receive possible molten material resulting from the (ultrasonic) welding of the lid to the structure. The document also mentions that the centre area of the lid, which serves as an inlet for water from the drinks machine, has a peripheral area with a reduced thickness.

Document PT 107043B discloses a capsule comprising a lid portion that can have at least one break formation facilitated for the entry of water. The lid has at least one break formation facilitated for the entry of an infusion water into the container. The container, lid, base and perforating element are made of plastic while the protective element is an aluminium plate. The perforation of the capsule lid is not mechanical, but only hydraulic.

Document PT 2139791 discloses a single-use holding capsule for an aromatic essence for producing an infusion comprising a container with a cover and a perforated base covered externally with a protective element, and a perforating element present on the inner face of said protective element, which acts by the fluid pressure created inside the container of the capsule, allowing the infusion to escape. The flat cover has at least one groove to facilitate the infusion water inside the container. It is also noted that the container, cover, base and perforating element are made of plastic, with only the protective element being an aluminium plate. In this case, the perforation of the cover is hydraulic.

The solutions revealed in the state of the art are aimed at optimising capsules in order to obtain a more efficient and precise opening by the machine, since an incorrect opening can negatively influence the achievement of an ideal infusion, as well as causing the detachment of materials, which contaminate the infusion, and the unwanted escape of edible product from the capsule.

However, most of the solutions presented are for capsules made of plastic material. In the case of capsules with aluminium material on top, these have several drawbacks due to the different rigidity and resistance properties of aluminium compared to plastic. These differences lead to a greater tendency for the aluminium to deform as a result of the impact of the opening element, rather than its opening, which means that the machine can open the aluminium capsule incorrectly or not at all.

There is therefore a need for aluminium capsules for espresso, tea and other soluble coffee machines, with characteristics that allow the edible product to be correctly contained, but which also provide effective opening when used in the compatible machine.

It is therefore an objective of the present invention to provide an improved aluminium capsule that overcomes the disadvantages of prior art solutions.

### BRIEF DESCRIPTION OF THE DRAWINGS

The following is a detailed description of the invention with reference to the attached drawings:
Fig. 1 shows the perspective view of the unopened capsule (1) according to one method of realisation, in which the flat opening surface (4) located at the top part (23) comprises a break line (5).
Fig. 2 shows the cutaway view of the capsule (1) according to Fig. 1, where the bottom part (22) comprises a pre-opening (6).
Fig. 3 shows the perspective view of the capsule (1) according to Fig. 1, highlighting the flat opening surface (4)
Fig. 4 shows the cutaway view of the capsule (1) according to Fig. 1, showing the fitting and opening by the machine, where in (A) the capsule is closed and in (B) the capsule is open.
Fig. 5 shows the perspective cutaway view of the fit between the capsule (1) according to Fig. 1 and the opening element (7) of the machine, before opening.
Fig. 6 represents the perspective view of the capsule (1) opened at the break line (5) present on the surface (4) of the flat opening according to Fig. 1.
Fig. 7 shows the perspective cutaway view of the capsule (1) opened at the break line (5) present on the surface (4) of the flat opening according to Fig. 1.
Fig. 8 shows the cutaway view of the open capsule at the break line (5) present on the flat opening surface (4) according to Fig. 1.
Fig. 9 shows the perspective view of the unopened capsule (1) whose flat opening surface (4) comprises three break lines.
Fig. 10 shows the perspective cutaway view of the capsule (1) according to Fig. 9, highlighting the flat opening surface (4) with three break lines
Fig. 11 shows the perspective cutaway view of the fitting between the capsule (1) according to Fig. 9 and the opening element (7) of the machine, after opening.
Fig. 12 shows the perspective view of the capsule (1) open at the three break lines (5) present on the flat opening surface (4) according to Fig. 9.
Fig. 13 shows the cutaway view of the capsule (1) opened on the flat opening surface (4) according to Fig. 9.
Fig. 14 shows the sectional perspective view of the capsule (1) opened on the flat opening surface (4) according to Fig. 9
Fig. 15 shows the perspective view of the unopened capsule (1) whose flat opening surface (4) comprises four break lines.
Fig. 16 shows the perspective cutaway view of the capsule (1) according to Fig. 15, highlighting the flat opening surface (4)
Fig. 17 shows the perspective cutaway view of the fitting between the capsule (1) according to Fig. 15 and the opening element (7) of the machine, after opening.
Fig. 18 shows the perspective view of the capsule (1) opened on the flat opening surface (4) according to Fig. 15.
Fig. 19 shows the cutaway view of the capsule (1) opened on the flat opening surface (4) according to Fig. 15.
Fig. 20 shows the perspective cutaway view of the capsule (1) opened on the flat opening surface (4) according to Fig. 15.
Fig. 21 shows the perspective view of the unopened capsule (1) whose flat opening surface (4) comprises six break lines.
Fig. 22 shows the perspective cutaway view of the capsule (1) according to Fig. 21, highlighting the flat opening surface (4)
Fig. 23 shows the perspective cutaway view of the fitting between the capsule (1) according to Fig. 21 and the opening element (7) of the machine, after opening.
Fig. 24 shows the perspective view of the capsule (1) opened on the flat opening surface (4) according to Fig. 21.
Fig. 25 shows the cutaway view of the capsule (1) opened on the flat opening surface (4) according to Fig. 21.
Fig. 26 shows the perspective cutaway view of the capsule (1) open on the flat opening surface (4) according to with Fig. 21.
Fig. 27 shows the perspective view of the unopened capsule (1) whose flat opening surface (4) comprises four protruding elements (8).
Fig. 28 shows the perspective cutaway view of the capsule (1) as shown in Fig. 27, highlighting the flat opening surface (4) with the elements (8) protruding.
Fig. 29 shows the perspective cutaway view of the fitting between the capsule (1) according to Fig. 27 and the opening element (7) of the machine, before opening.
Fig. 30 shows the perspective cutaway view of the fitting between the capsule (1) according to Fig. 27 and the opening element (7) of the machine, after opening.
Fig. 31 shows the perspective cutaway view of the capsule (1) opened in accordance with Fig. 27, highlighting the flat opening surface (4) with the open protruding elements (8).
Fig. 32 represents the perspective view of the flat opening surface (4) with four protruding elements (8), in accordance with Fig. 27, showing the base face (81), the top face (82) and the peripheral contour (83) of said base face (81).
Fig. 33 shows the perspective view of the unopened capsule (1) whose flat opening surface (4) comprises three protruding elements (8) juxtaposed to each other.
Fig. 34 shows the perspective cutaway view of the capsule (1) as shown in Fig. 33, highlighting the flat opening surface (4) with the protruding elements (8) juxtaposed to each other.
Fig. 35 shows the perspective cutaway view of the fitting between the capsule (1) according to Fig. 33 and the opening element (7) of the machine, before opening.
Fig. 36 shows the perspective cutaway view of the fitting between the capsule (1) according to Fig. 33 and the opening element (7) of the machine, after opening.
Fig. 37 shows the perspective cutaway view of the capsule (1) opened in accordance with Fig. 33, highlighting the flat opening surface (4) with the open protruding elements (8).

### SUMMARY OF THE INVENTION

The present invention relates to an aluminium capsule (1) for a soluble edible product comprising a closed container (2) containing an individual dose of a soluble edible product, the container (2) being delimited by a side wall (21), a bottom part (22) and a top part (23), where said top part (23) comprises a truncated-conical or truncated-pyramidal element (3), the smaller base of which constitutes a flat opening surface (4) comprising at least one break line.

In one aspect of the present invention, said top part (23) comprises a truncated cone element (3).

In another aspect, the aforementioned top part (23) comprises a pyramidal trunk element (3).

In one aspect, said flat opening surface (4) comprises a break line located at the centre of said flat opening surface (4).

In another aspect of the present invention, said flat opening surface (4) comprises up to 8 break lines.

In yet another aspect, said flat-opening surface (4) comprises 2 to 8 break lines that converge at a break point located at the centre of the flat-opening surface (4).

In one aspect of the invention, said flat opening surface (4) comprises 3 break lines that converge at a break point located at the centre of the flat opening surface (4).

In another aspect of the invention, said flat opening surface (4) comprises 6 break lines that converge at a break point located at the centre of the flat opening surface (4)

In yet another aspect, said flat opening surface (4) comprises at least one protruding element (8) containing a base face (81) and a top face (82), wherein said base face of said protruding element (8) is arranged on said flat opening surface (4) and at least part of the peripheral contour (83) of said base face constitutes a break line defined on said flat opening surface (4).

In one aspect of the invention, said flat opening surface (4) comprises three to eight protruding elements (8), juxtaposed to each other, defining respectively three to eight common break lines that converge at the same break point.

In another aspect of the invention, the truncated-conical or truncated-pyramidal element (3) has a 30-90° inclination of its side walls in relation to the centre plane, preferably around 40°.

In another aspect, the flat opening surface (4) has a thickness of 0.05 to 1 mm, preferably 0.1 mm.

In one aspect of the invention, any of said break lines comprises a depth situated in the range of 20 to 90 per cent of the thickness of the flat-opening surface (4), preferably 50 per cent of the thickness of the flat-opening surface (4).

The capsule (1) of the present invention is suitable for preparing soluble edible products in capsule coffee machine machines.

In one aspect of the invention, the capsule (1) is suitable for preparing espresso coffee, tea or other soluble edible products.

### DETAILED DESCRIPTION OF THE INVENTION

The capsule of the present invention is designed for use in soluble edible product machines, such as espresso coffee, tea or other soluble products, which open the capsule at the top. These machines, known as capsule coffee machines, work with the aid of a lever that opens an extraction unit consisting of a container where the capsule is housed after insertion into the machine and a sealing cap that breaks or opens the capsule and introduces hot water. Finally, the capsule is expelled by repeating the opening movement of the lever.

A flat configuration of the top of the capsule, where the material is aluminium, leads to plastic deformation of this material when opening, which can lead to incorrect portions inside the capsule and also to the unwanted escape of edible product from the capsule.

The purpose of the present invention is to provide a single-use aluminium capsule for espresso, tea or other soluble coffee machines that is compatible with the opening element (7) of said machines. In order to overcome the problem of plastic deformation of the aluminium when it is opened by the machine, achieving that the aluminium is opened in a specific area, the present inventors have developed a capsule whose top part (23) has a configuration that optimises this process.

To this end, the present invention provides a capsule comprising a closed container (2) containing an individual dose of a soluble edible product, the container (2) being delimited by a side wall (21), a bottom part (22) and a top part (23), wherein said top part (23) comprises a truncated-conical or truncated-pyramidal element (3) whose smaller base constitutes a flat opening surface (4) of the capsule (1), wherein said opening surface (4) comprises at least one break line (5) or at least one protruding element (8), conferring a better opening of the capsule by the machine.

Within the scope of the present invention, a tapered element, of the truncated-conical or truncated-pyramidal type, comprises a larger base and a smaller base, where the smaller base constitutes a flat opening surface (4) of the capsule (1).

According to the present invention, a "truncated cone" is a geometric solid formed by the lower part of a cone after being sectioned parallel to its base, in which the smaller cone formed is discarded. The truncated geometric solid thus formed comprises two circular bases with different radii, one the larger base and the other the smaller base.

In turn, according to the present invention, a "pyramidal trunk" is a geometric solid formed by the lower part resulting from the cross-section parallel to the base of a pyramid, in which the upper part is discarded. The truncated pyramid geometric solid thus formed comprises two bases, a larger base and a smaller base. The bases can be formed by any polygon, namely triangular, quadrangular, pentagonal, hexagonal or heptagonal.

Also, in the context of the present invention, the term "break line" is understood as a local discontinuity caused by the removal of material in the target object. This discontinuity is called a line due to the low value of the ratio between its radial dimension and longitudinal dimension (much smaller width than length). This break line can take different forms apart from the obvious linear or rectilinear form. In the specific case of the present invention, the target object is a surface (4) with a flat opening, formed from aluminium material, on which break lines are arranged as described below. It is important to note that although the break lines result from the removal of material on the flat opening surface (4), they cannot alter the watertight condition of the surface until the capsule is opened by a compatible machine. This means that the break lines are not open slots in the material of the surface (4) of the flat opening, but only lines defined by the partial removal of material from the surface (4) of the opening, which simultaneously maintains the tightness of the surface (4) of the flat opening and creates a locally weakened region with regard to the tensile strength of the material of the surface (4) of the flat opening. Thus, any break line is well defined by its width, length and depth, the latter dimension corresponding to the thickness of material removed from the surface (4) of the flat opening, so the depth of the break line is directly related to the thickness of the surface (4) of the opening in the local concrete where the break line is arranged.

In the context of the present invention, the expression "break point" is understood to mean the point of intersection of the break lines.

In the context of the present invention, the term "protruding element" is understood to mean a three-dimensional structure that is resting on the surface (4) of the flat opening. Said structure comprises a base face and a top face, where said base face is arranged on the flat opening surface (4) and at least part of the peripheral contour of said base face constitutes a break line defined on the flat opening surface (4). The edges of this structure are rounded to allow easier breaking when pressed by the opening element (7) of the soluble edible product preparation machine.

In the context of this description, the term "comprising" should be understood as "including but not limited to". As such, it should not be interpreted as "consisting only of".

It should be noted that any X value presented in the course of this description should be interpreted as an approximate value of the real X value, since such an approximation to the real value would reasonably be expected by the specialist in the technique due to experimental and/or measurement conditions that introduce deviations from the real value. So, for example, the reference to "80 per cent" means a value of "around 80 per cent".

Unless otherwise stated, the ranges of values presented in this description are intended to provide a simplified and technically accepted way of indicating each individual value within the respective range. By way of example, the expression "15% to 25%" or "between 15% and 25%" means any value within this range, for example 15%; 16%; 17%; 18%; 19%; 20%; 21%; 22%; 23%; 24%; 25%; or others, for example including a decimal place.

The configuration of the aforementioned part (23) at the top of capsule of the invention provides greater resistance to the force exerted by the machine's opening device, which occurs when the capsule is opened by the coffee machine, thus avoiding excessive deformation of the top of the capsule which could prove counterproductive in relation to its effective opening. To this end:
said top part (23) comprises a truncated conical or truncated pyramidal element (3), the smaller base of which constitutes a flat opening surface (4), which in turn comprises one or more break lines (5) or one or more protruding elements (8), which yield more easily to pressure by the opening element (7) of the soluble edible products machine;
due to the truncated cone or truncated pyramid shape of the top part (23), the flat opening surface (4) of the capsule (1) is higher than the truncated cone or truncated pyramid peripheral area, and due to the existence of the aforementioned break lines (5) or protruding elements (8), there will be a concentration of opening forces on the flat opening surface (4).

The truncated-conical or truncated-pyramidal shape of the top part (23) thus constitutes a support zone, ensuring that it has sufficient strength so that it does not deform when pressurised by the opening element (7) of the machine, but rather an opening directed towards the flat opening surface (4).

The present configuration of the top part (23) of the capsule disclosed here solves the problem mentioned above: an aluminium capsule whose top part (23) does not deform under the pressure exerted when it is opened by the machine.

In one embodiment, the top part (23) comprises a truncated element (3).

In yet another alternative embodiment, the top part (23) comprises a pyramidal trunk element (3).

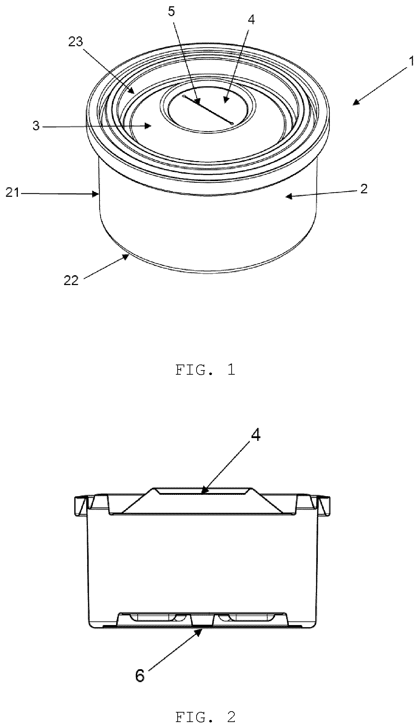

In one embodiment, the surface (4) with a flat opening comprises a break line located at the centre of said surface (4) with a flat opening (Fig. 1).

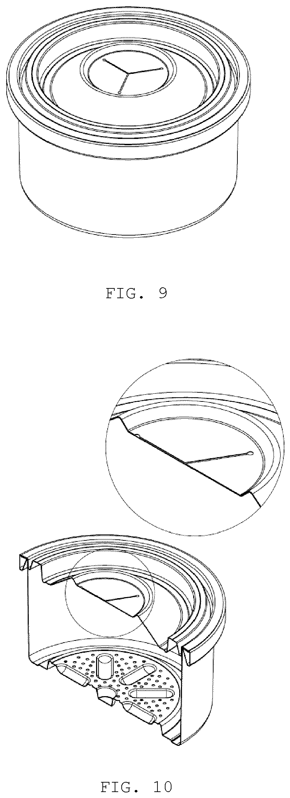

In one embodiment, the aforementioned flat opening surface (4) comprises up to 6 break lines (Figs. 9, 15 and 21).

In another embodiment, the aforementioned flat opening surface (4) comprises 2 to 6 break lines that converge at a break point located at the centre of the flat opening surface (4).

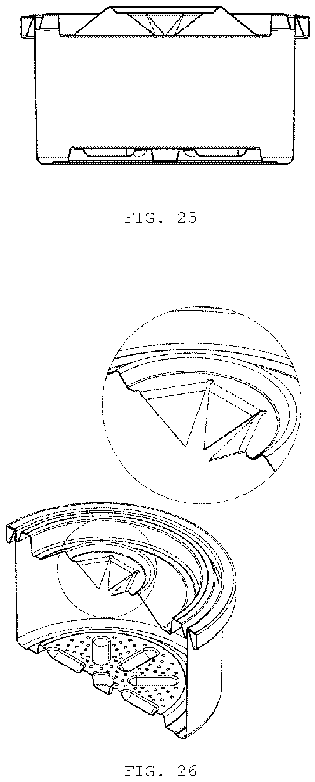

In another preferred embodiment, said flat opening surface (4) comprises 3 break lines which converge at a break point located at the centre of the flat opening surface (4) (Fig. 25).

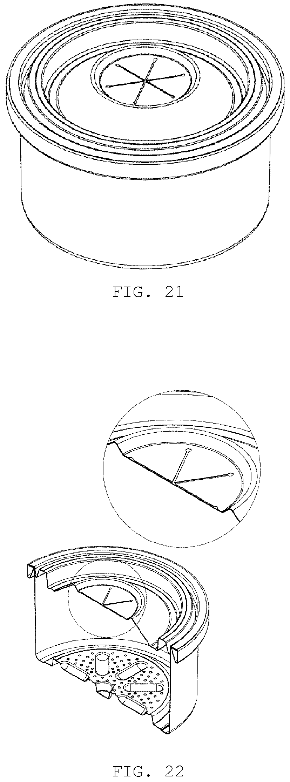

In an even more preferential embodiment, the aforementioned flat-opening surface (4) comprises 6 break lines that converge at a break point located in the centre of the flat-opening surface (4) (Fig. 21)

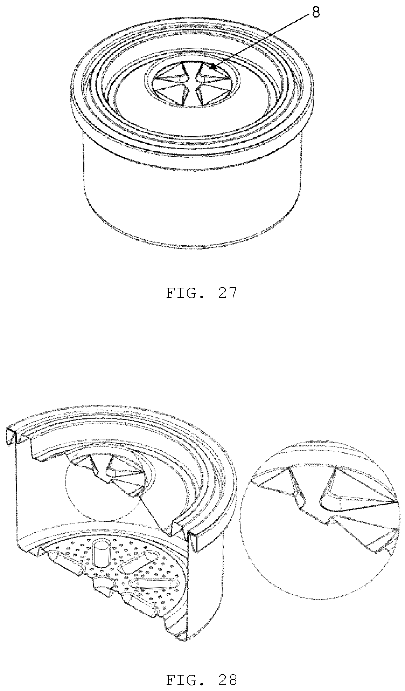

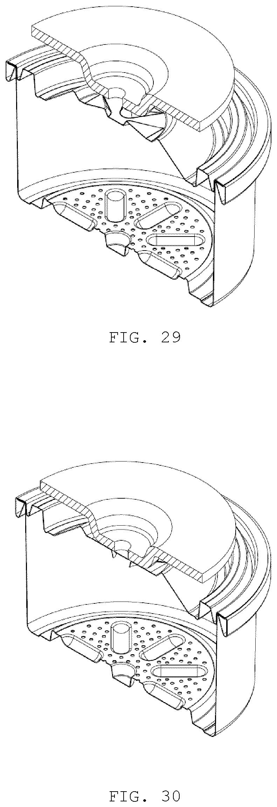

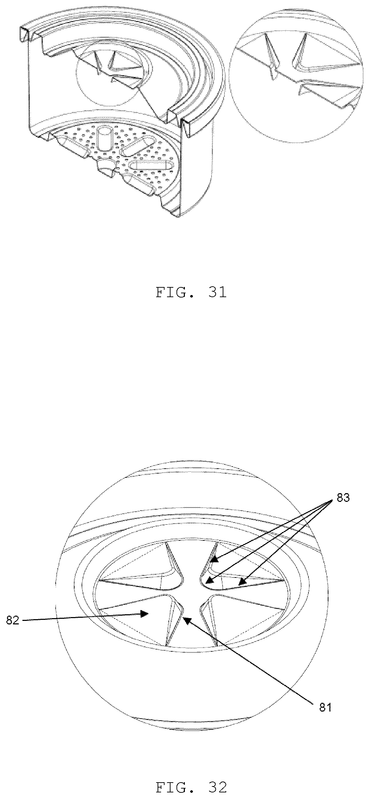

In another embodiment, said flat opening surface (4) comprises at least one protruding element (8) containing a base face (81) and a top face (82), where said base face of the protruding element (8) is arranged on the flat opening surface (4) and at least part of the peripheral contour (83) of said base face constitutes a break line defined on the flat opening surface (4) (Figs. 27 to 32)

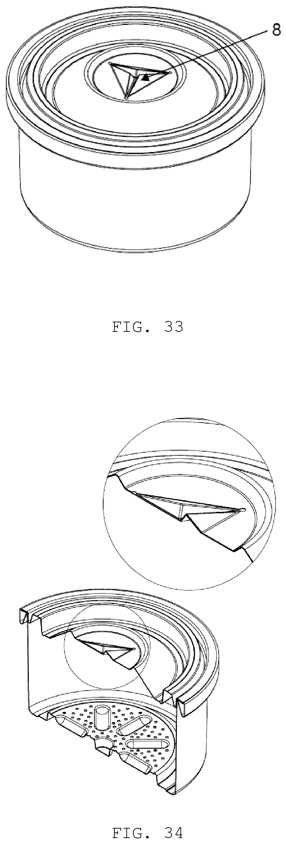

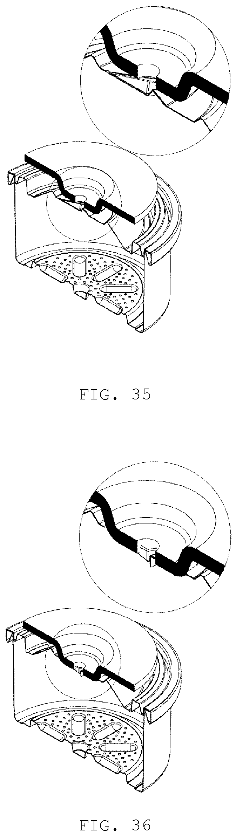

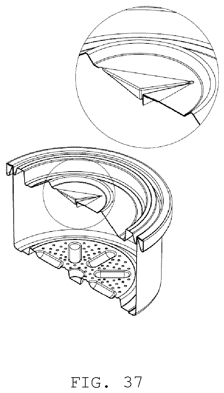

In another embodiment, as shown in Figs. 33 to 37, the aforementioned flat opening surface (4) comprises three protruding elements (8), juxtaposed to each other, defining three common break lines that converge at the same break point.

In other embodiments, not shown, the flat opening surface (4) comprises four to eight protruding elements (8), juxtaposed to each other, defining an equal number of common break lines that converge at the same break point.

In one embodiment, the truncated-conical or truncated-pyramidal element (3) has a 30-90° inclination of its side walls in relation to the central plane.

In another preferred form of realisation, the slope is around 40.°

In one form of realisation, the flat opening surface (4) has a thickness of 0.05 to 1 mm.

Preferably, this thickness is 0.1 mm.

In one embodiment, these break lines comprise a depth in the range of 20 to 90% of the thickness of the surface (4) of the flat opening.

In a preferred embodiment, the depth of any of the break lines is 50% of the thickness of the surface (4) of the flat opening.

In one embodiment, the bottom part (22) of the capsule comprises a pre-opening (6) which is broken by the pressure of the liquid injected by the machine through the opening of the top part (23), in the area of the surface (4) of the flat opening of the capsule (1).

In one embodiment, the soluble edible product is selected from the group comprising espresso coffee, tea or other solubles.

Figs. 1 to 3 show how the capsule (1) of the present invention is executed with a break line (5) on the surface (4) of the flat opening, which when subjected to the pressure force of the opening element (7) of the edible products machine is torn, allowing water to pass through.

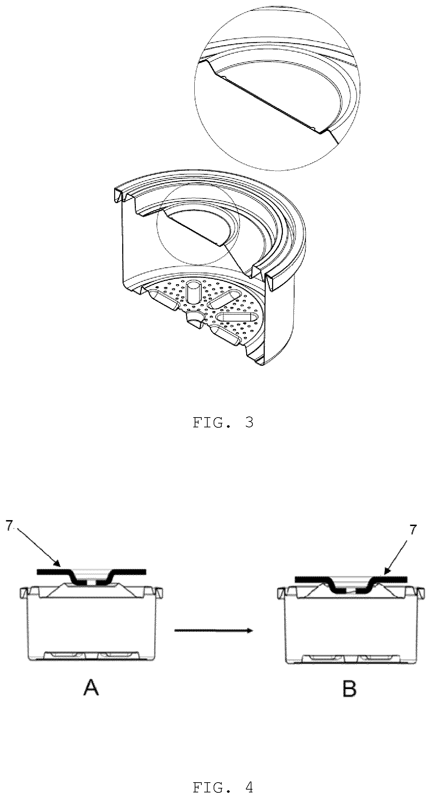

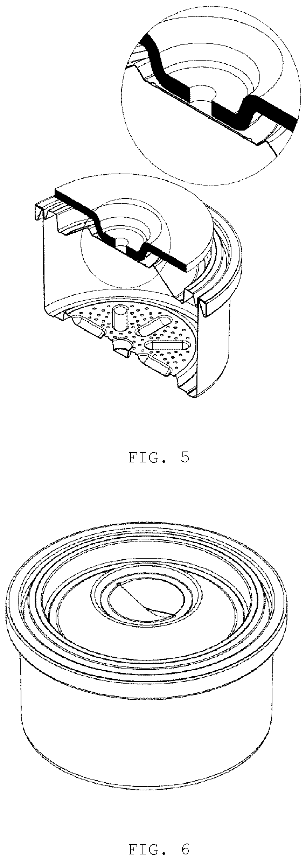

Fig. 4 shows how the opening element (7) of the machine is fitted to the top part (23) of the capsule (1) of the present invention, where it can be seen that both its truncated cone or truncated pyramid shape and the flat opening surface (4) allow a fitting that directs the pressure force towards the break lines (5). Figs. 5, 11, 17 and 23 show the aforementioned fitting of the opening element (7) for the capsules (1) of the present invention, with 1, 3, 4 and 6 break lines (5) on the flat opening surface (4).

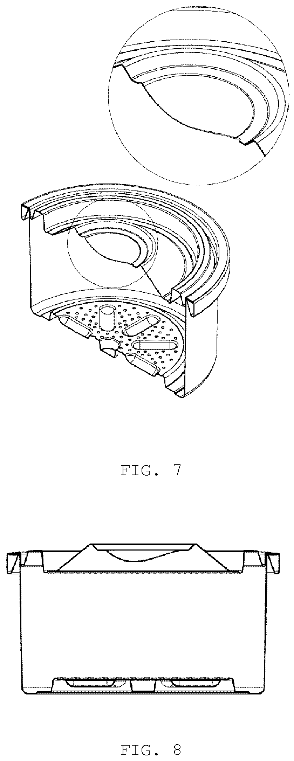

Figs. 6 to 8 show the capsule (1) of the present invention opened when there is a break line (5) on the flat opening surface (4).

Figs. 9 and 10 show how the capsule (1) of the present invention is realised, with three break lines (5) on the flat opening surface (4), which, when subjected to the pressure of the opening element (7) of the edible products machine, are torn, allowing water to pass through.

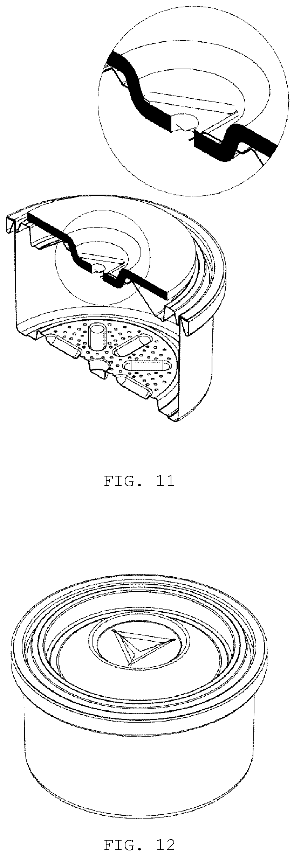

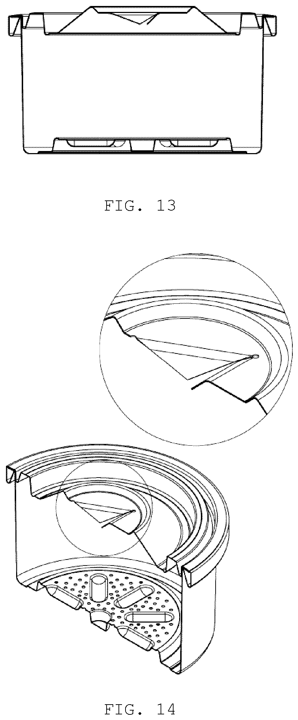

Figs. 12 to 14 show the capsule (1) of the present invention opened when there are three break lines (5) on the flat opening surface (4).

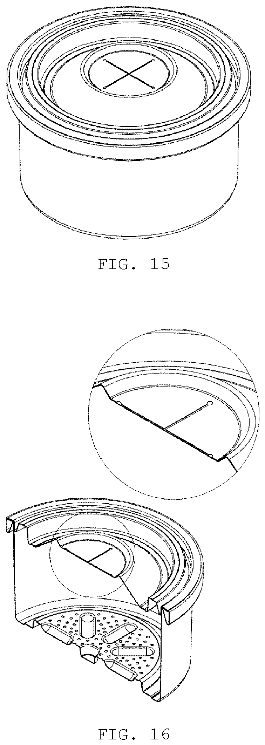

Figs. 15 and 16 show how the capsule (1) of the present invention is executed with four break lines (5) on the flat opening surface (4), which are torn when subjected to the pressure of the opening element (7) of the edible products machine, allowing water to pass through.

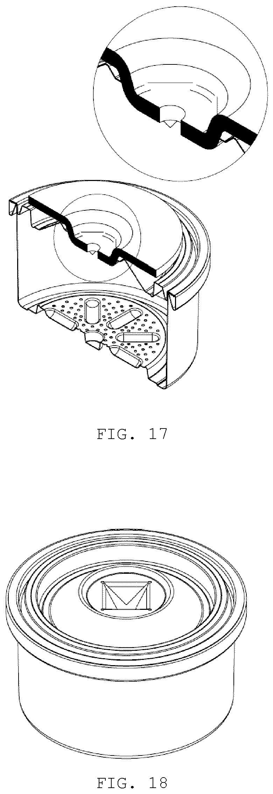

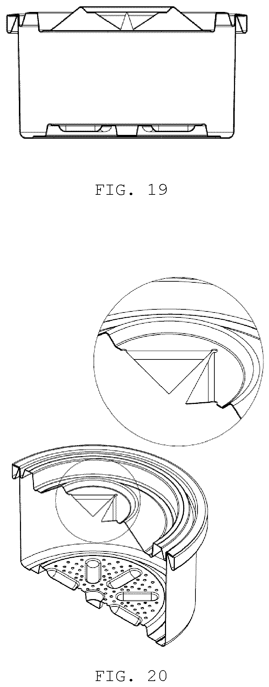

Figs. 18 to 20 show the capsule (1) of the present invention opened when there are four break lines (5) on the flat opening surface (4).

Figs. 21 and 22 show how the capsule (1) of the present invention is executed, with six break lines (5) on the flat opening surface (4), which, when subjected to the pressure of the opening element (7) of the edible products machine, are torn, allowing water to pass through.

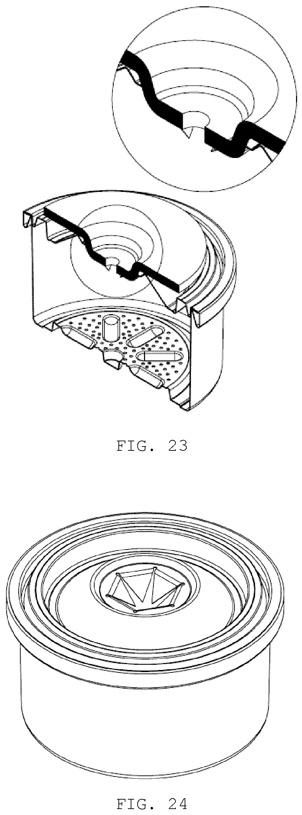

Figs. 24 to 26 show the capsule (1) of the present invention opened when there are six break lines (5) on the flat opening surface (4).

Figs. 27 to 32 show how the capsule (1) of the present invention is executed with four elements (8) protruding from the flat opening surface (4), which, when subjected to the force of the opening element (7) of the edible products machine, are torn by the peripheral contours that are in contact with the opening surface (4), allowing water to pass through.

Figs. 33 to 37 show how the capsule (1) of the present invention is executed with three protruding elements (8), juxtaposed to each other, on the flat opening surface (4), which, when subjected to the force of the opening element (7) of the edible products machine, are torn by the common break lines, allowing water to pass through.

With reference to Figs. 1, 9, 15, 21, 27 or 33, the aluminium capsule (1) for a soluble edible product comprises a closed container (2) containing an individual dose of a soluble edible product, which is delimited by a side wall (21), a bottom part (22) and a top part (23).

When in use, the capsule is placed in the capsule compartment of the soluble edible product preparation machine, **e.g.** espresso machine. The capsule is kept in this compartment and the opening element (7) of the machine is activated which will pierce the capsule in the top part (23), specifically in the six break lines of the flat opening surface (4) (Fig. 21).

The water used to make the espresso is then injected under pressure into the break lines (5) of the capsule, mixing with the coffee powder inside the capsule. The pressure can be relatively high and can reach around 16 bar. This pressure causes the pre-opening (6) to open, through which the espresso flows evenly directly through the opening (6) into the espresso receiving container.

It should be noted that although the present invention has been described with reference to its preferred embodiments, many modifications and alternatives can be made by a person skilled in the art without leaving the scope of the invention, which is defined by the claims.

## Claims

1. An aluminium capsule (1) for a soluble edible product comprising a closed container (2) containing an individual dose of a soluble edible product, the container (2) being delimited by a side wall (21), a bottom part (22) and a top part (23),
**characterised in that** said top part (23) comprises a truncated-conical or truncated-pyramidal element (3), the smaller base of which constitutes a flat opening surface (4) comprising at least one break line.

2. The aluminium capsule (1) for an edible product according to claim 1, **characterised in that** said top part (23) comprises a truncated-conical element (3).

3. The aluminium capsule (1) for an edible product according to claim 1, **characterised in that** said top part (23) comprises a truncated pyramidal element (3).

4. The aluminium capsule (1) for an edible product according to claim 1, **characterised in that** said flat opening surface (4) comprises a break line located at the centre of said flat opening surface (4).

5. The aluminium capsule (1) for an edible product according to claim 1, **characterised in that** said flat opening surface (4) comprises up to 8 break lines.

6. The aluminium capsule (1) for an edible product according to claim 1, **characterised in that** said flat opening surface (4) comprises 2 to 8 break lines that converge at a break point located at the centre of the flat opening surface (4).

7. The aluminium capsule (1) for an edible product according to claim 6, **characterised in that** said flat opening surface (4) comprises 3 break lines that converge at a break point located at the centre of the flat opening surface (4).

8. The aluminium capsule (1) for an edible product according to claim 6, **characterised in that** said flat opening surface (4) comprises 6 break lines that converge at a break point located at the centre of the flat opening surface (4).

9. The aluminium capsule (1) for an edible product according to claim 1, **characterised in that** said flat opening surface (4) comprises at least one protruding element (8) containing a base face (81) and a top face (82), wherein said base face of said protruding element (8) is arranged on said flat opening surface (4) and at least part of the peripheral contour (83) of said base face constitutes a break line defined on said flat opening surface (4).

10. The aluminium capsule (1) for an edible product according to claim 9, **characterised in that** said flat opening surface (4) comprises three to eight protruding elements (8), juxtaposed to each other, defining respectively three to eight common break lines that converge at the same break point.

11. The aluminium capsule (1) for an edible product according to claim 1, **characterised in that** the element (3) which is truncated or truncated-pyramidal has a 30-90° inclination of its side walls with respect to the central plane, preferably around 40°.

12. The aluminium capsule (1) for an edible product according to claim 1, **characterised in that** the flat opening surface (4) has a thickness of 0.05 to 1 mm, preferably 0.1 mm.

13. The aluminium capsule (1) for an edible product according to any one of the preceding claims, **characterised in that** any one of said break lines comprises a depth situated in the range of 20 to 90% of the thickness of the surface (4) of the flat opening, preferably 50% of the thickness of the surface (4) of the flat opening.

14. Use of the capsule (1) as claimed in the preceding claims, **characterised in that** it is for the preparation of soluble edible products in capsule coffee machine machines.

15. Use of the capsule (1) according to the previous claim, **characterised in that** it is for the preparation of espresso coffee, tea or other soluble edible products.
